Europäisches Patentamt

European Patent Office

Office européen des brevets

(19)

(11) **EP 1 650 823 A1**

(12) **EUROPEAN PATENT APPLICATION**
published in accordance with Art. 158(3) EPC

(43) Date of publication:
    **26.04.2006 Bulletin 2006/17**

(51) Int Cl.:
    **H01M 8/10** (1974.07)     **H01M 8/12** (1974.07)

(21) Application number: **03786475.8**

(22) Date of filing: **23.12.2003**

(86) International application number:
    **PCT/RU2003/000576**

(87) International publication number:
    **WO 2004/109836 (16.12.2004 Gazette 2004/51)**

(84) Designated Contracting States:
    **AT BE BG CH CY CZ DE DK EE ES FI FR GB GR HU IE IT LI LU MC NL PT RO SE SI SK TR**

(30) Priority: **10.06.2003 RU 2003117115**

(71) Applicants:
    • **Hilchenko, Galina Vitalevna**
      **Moscow 129343 (RU)**
    • **Myatiyev, Ata Atayevich**
      **Moscow, 127083 (RU)**

(72) Inventors:
    • **Hilchenko, Galina Vitalevna**
      **Moscow 129343 (RU)**
    • **Myatiyev, Ata Atayevich**
      **Moscow, 127083 (RU)**

(74) Representative: **Henrion, Oliver et al**
    **Patentanwälte**
    **Zellentin & Partner**
    **Rubensstrasse 30**
    **67061 Ludwigshafen (DE)**

(54) **BISMUTH OXIDE-BASED ELECTRODE-ELECTROLYTE PAIR (VARIANTS), METHOD FOR THE PRODUCTION THEREOF (VARIANTS) AND ORGANOGEL**

(57)     This invention relates to the field of electric power generation by direct transformation of the chemical energy of gaseous fuel to electric power by means of high-temperature solid oxide fuel cells.

The invention can be used for the fabrication of miniaturized thin filmed oxygen sensors, in electrochemical devices for oxygen extraction from air and in catalytic electrochemical devices for waste gas cleaning or hydrocarbon fuels conversion.

The technical objective of the invention is the production of a low-cost electrode-electrolyte pair having an elevated electrochemical efficiency as the most important structural part of a highly efficient, economically advantageous and durable fuel cell. Furthermore, the invention achieves additional objectives.

The achievement of these objectives is exemplified with two electrode-electrolyte pair designs and their fabrication methods, including with the use of a special organogel.

FIG 1

EP 1 650 823 A1

## Description

## Technical field.

This invention relates to the field of electrochemical devices intended for

- Production of oxygen (oxygen pumps);
- Generation of electric power by direct transformation of the chemical energy of gaseous fuel to electric power by means of solid oxide fuel cells;
- Cleaning of gaseous industrial wastes and disposal of carbon dioxide (greenhouse effect mitigation);
- Control of oxygen content (oxygen sensors);
- Electrochemical synthesis, e.g. production of singas from methane and other hydrocarbons.

## State of the Art.

The basic operation principle of the abovementioned devices is oxygen transfer through dense oxide based electrolyte having high temperature conductivity of oxygen. The two electrodes located at the two sides of the electrolyte and forming the electrochemical cell provide for the work of these electrochemical devices.

Supply of electricity to the electrodes produces a directed flow of oxygen from the cathode to the anode through the electrolyte. This is the operation principle of the oxygen pump that takes oxygen from the air at the cathode side and evolves pure oxygen at the anode side. The same principle is used for industrial waste cleaning (nitrogen or sulfur oxide reduction) or carbon dioxide disposal.

The difference in the partial pressures of oxygen at the two sides of the electrochemical cell generates an electric signal that shows the concentration of oxygen at one of the cell sides (this is the oxygen sensor operation principle). Constant generation of electric power is provided by fuel cells where a constant flow of oxygen ions through the electrolyte produces an uninterrupted flow of electric current between the electrodes, the anode side oxygen being spent for the electrochemical oxidation of the gaseous fuel.

The efficiency of the abovementioned electrochemical devices depends on the specific oxygen ion conductivity of the oxide electrolyte. The higher the oxygen conductivity, the higher the efficiency. Preferably, the high oxygen conductivity should be obtained at lower temperature because high temperatures reduce the service life of an electrochemical device.

Stabilized and doped bismuth oxide has a high conductivity, especially at lower temperature.

Apart from solid electrolyte material, the most important component of the oxide fuel cell structure that determines the efficiency of electric current generation is the electrode-electrolyte pair, which in turn depends on fabrication technology.

Known are electrode-electrolyte pairs with a bismuth oxide base electrolyte wherein the thick electrolyte layer is produced using power technology and a porous electrode is deposited onto its surface. The electrode material can be silver, platinum, $La_{0.7}Sr_{0.3}CoO_3$ (A.A.Yaremchenko, V.V.Kharton, E.M.Naumovich, A.A.Tonoyan Stability of $\delta\text{-}Bi_2O_3$-based solid electrolytes, Materials Research Bulletin, 35 (2000) pp. 515-520) or $La_{0.6}Sr_{0.4}Co_{0.2}Fe_{0.8}O_3$ (K.Huang, M.Feng, J.B.Goodenough, $Bi_2O_3$ -$Y_2O_3$ - $CeO_2$ solid solution oxide-ion electrolyte, Solid State Ionics, 89, (1996) pp. 17-24).

Disadvantages of these electrode-electrolyte pairs are the high electrical resistivity of the thick electrolyte layer, the small electrochemical contact area between the electrode and the electrolyte, and the low adhesion between the electrode and the electrolyte. The former two disadvantages reduce the electrochemical efficiency of the cell, whereas the third one accounts for the low reliability and operability of the electrode-electrolyte pairs.

Moreover, when designing the electrode-electrolyte pairs wherein the electrolyte is made from bismuth oxide base materials, one should take into account that the very high chemical activity of these materials leads to chemical interaction of the electrolyte with the electrode materials during high temperature fabrication process. As a result, the structural and thermal stresses may destruct the electrolyte and/or the electrode layer.

Known is a method of thin electrolyte layer fabrication from doped bismuth oxide (US 6,214,194 A, published 2001). The method is based on the electrochemical cathodic deposition of bismuth oxides and doping metals from their salts in an eutectic melt of potassium and lithium chlorides.

However, the electrochemical deposition principle and the use of molten alkaline metal salts account for the serious disadvantages of this method, in particular:

- strong dependence of the properties of the deposited electrolytes on the properties of electrodes;
- the difficulty of producing bismuth based electrode with a stoichiometric composition;
- electrolyte contamination with alkaline metal chlorides;
- low efficiency and reproducibility;
- noxious process;
- high commercial fabrication costs.

Known is an organogel consisting of 0.2-0.4 $\mu m$ yttrium-doped zirconium dioxide powder (4 wt. parts) and an organic liquid (100 wt. parts) consisting of ethyl alcohol, a dispersant (alkylpolyoxyethylene phosphorus ether), a binder (ethylcellulose), an antifoaming agent (aorbitanoleate) and a volatile solvent (US 5968673 A, published 1999).

Disadvantages of said organogel are that it does not contribute to the formation of the dense structure in the electrolyte, does not favor temperature reduction, does not provide any applicable choice of electrode materials based on zirconium dioxide and does not provide for a technologically suitable method of electrolyte production on electrodes having different properties and parameters.

**Disclosure of the Invention.**

The technical objective of the invention is the production of a low-cost electrode-electrolyte pair having an elevated electrochemical efficiency as the most important structural part of a highly efficient, economically advantageous and durable fuel cell.

Each of the inventions included into the group is aimed at achieving a separate additional objective.

More particularly, the electrode-electrolyte pair embodiment shown as the first and the fourth objectives of the invention in the suggested group of inventions achieve additional technical objectives comprising:

reduction of the working temperature of the electrochemical device comprising the electrode-electrolyte pair;

■ increasing the operation efficiency and reliability of the electrode-electrolyte pair;
■ reduction of the dimensions and weight per unit power generated by the fuel cell comprising the electrode-electrolyte pair;
■ adaptability of the design, materials and dimensions of the electrode-electrolyte pair.

Furthermore, the electrode-electrolyte pair fabrication methods shown as the second and fifth objectives of the invention in the suggested group of inventions achieve additional technical objectives comprising increasing the technological suitability of the method for commercial fabrication of the electrode-electrolyte pair, increasing the fabrication efficiency and reduction of the cost of the electrode-electrolyte pair and the entire electrochemical device, reduction of power consumption and increasing the adaptability of the method.

[0019] - Furthermore, the organogel comprised in the components used for the fabrication of the first embodiment of the electrode-electrolyte pair and shown as the third objective of the invention in the suggested group of inventions achieves additional technical objectives comprising reducing the cost of the organogel, increasing its adaptability, increasing its adhesion to the electrode material and avoiding electrolyte contamination with detrimental impurities.

Below, embodiments of the electrode-electrolyte pair design, electrode-electrolyte pair fabrication methods and materials used are disclosed in accordance with the invention claimed herein that achieve said technical objective.

The electrode-electrolyte pair comprises a porous electrode to the surface of which is deposited a multilayered solid electrolyte based on bismuth oxide with stabilizing additions. The solid electrolyte consists of the inner three-dimensional solid electrolyte layer that is a combined amorphous and crystalline phase. The inner layer fills, at least partially, the surface pores of the porous electrode to a depth of 5 - 50 $\mu$m. The solid electrolyte additionally contains a dense outer layer that is also a combined amorphous and crystalline phase.

The inner and outer electrolyte layers may have similar or different compositions.

As the stabilizing additions, the electrode-electrolyte pair contains yttrium and/or vanadium and/or molybdenum and/or zirconium and/or lead and/or tungsten and/or tantalum and/or chromium and/or cobalt and/or copper and/or alkaline earth metals and/or rare earth metals.

The electrode has a flat or pipe-like shape.

The electrode is in a porous ceramic or metallic or metallic material with pore sizes of above 1 $\mu$m.

The electrolytic efficiency of the electrode-electrolyte pair and the entire electrochemical device is increased due to the following advantages:

■ increasing the lateral conductivity of the electrolyte due to the optimization of the outer and inner bismuth oxide layers by doping;
■ increasing the electric contact area of the electrolyte with the electrode material due to the use of the inner surface of electrode pores;
■ reduction of the electrical resistivity at the electrode-electrolyte boundary due to the low electrode deposition temperatures that do not cause the formation of high electrical resistivity phases;
■ increasing the electrochemical contact area of the gaseous phase, the electrode and the electrolyte due to the nanoporous inner electrolyte layer and the surface conductivity.

Reduction of the working temperature of the electrochemical device consisting of the electrode-electrolyte pair is achieved due to the above advantages and the possibility of producing a dense electrolyte layer having a minimum thickness.

Increasing the operation efficiency and reliability of the electrode-electrolyte pair is achieved due to the high strength of the amorphous and nanocrystalline structure of bismuth oxide; elimination of the surface stress concentrators in the electrode due to the nanoporous inner electrode layer; the high damping capacity of the inner nanoporous and the three-dimensional electrolyte layers that avoid cracking in the electrolyte.

Reduction of the cost, dimensions and weight of the electrochemical device is achieved by increasing the electrochemical efficiency of the electrode-electrolyte pair.

The increase in the adaptability of the device technology is achieved due to the possibility of using electrodes having a porosity of above 1 μm made from ceramic, metalloceramic and metallic materials, in the form of a cathode or anode having a flat or pipe shape.

The electrode-electrolyte pair fabrication method comprises the formation, on the microporous electrode surface, of a partially electrode-penetrating multilayered solid electrolyte based on bismuth oxide with stabilizing additions. During the formation, the porous electrode surface is initially impregnated with organogel consisting of particles of bismuth oxide with stabilizing additions and an organic solution containing organic salts of bismuth and the stabilizing metals. The next step is destruction of the organogel organic part that leads to the chemical deposition of the inner nanoporous three-dimensional solid electrolyte layer on the electrode surface. Then, the inner organogel layer is deposited onto the surface, said layer consisting of particles of bismuth oxide with stabilizing additions and an organic solution containing organic salts of bismuth and the stabilizing metals. The next step is destruction of the organogel organic part that leads to the chemical deposition of the dense outer layer of the multilayered electrolyte onto the inner layer surface.

The organogel used for the formation of the inner and outer solid electrolyte layers can be of similar or different compositions.

The stabilizing additions for the solid electrolyte according to this method can be yttrium and/or vanadium and/or molybdenum and/or zirconium and/or lead and/or tungsten and/or tantalum and/or chromium and/or cobalt and/or copper and/or alkaline earth metals and/or rare earth metals.

The microporous electrode surface is impregnated with organogel in vacuum or by mechanical pressing the organogel into the microporous surface of the electrode.

Organogel destruction is performed with high-rate pyrolysis at temperatures within 600°C in an oxidizing, inert or weakly reducing gas atmosphere.

Organogel organic part destruction is performed simultaneously or in sequence, by organogel impregnation or deposition to the inner layer surface.

During organogel impregnation of the electrode or organogel deposition to the inner layer surface with simultaneous destruction, the organogel is deposited to the surface to be coated by spraying or printing.

During organogel impregnation of the electrode or organogel deposition to the inner layer surface with subsequent destruction, the organogel is deposited to the cold surface of the electrode or the inner layer with subsequent high-rate heating of the electrode.

Organogel impregnation of the electrode or organogel deposition to the inner layer surface and organogel destruction are performed in one or multiple steps.

Said technical result is achieved due to the high rate of material deposition and electrolyte formation on the electrode surface; possibility of using simple and cheap equipment, use of low temperatures, possibility of setting up the technological process in a completely automatic conveyor embodiment; method adaptability with respect to electrolyte composition choice; method adaptability with respect to electrode-electrolyte pair design choice; possibility of taking the properties and parameters of the electrode materials into account.

The organogel used for the fabrication of the electrode-electrolyte pair contains nanosized particles of bismuth oxide with stabilizing additions and an organic solution containing organic salts of bismuth and the stabilizing metals, a mixture of α-branching carbonic acids with the general formula $H(CH_2\text{-}CH_2)_nCR'R''\text{-}COOH$, where R' is $CH_3$, R'' is $C_mH_{(m+1)}$ and m is from 2 to 6, with an average molecular weight of 140-250.

The stabilizing metals used for the organogel are yttrium and/or vanadium and/or molybdenum and/or zirconium and/or lead and/or tungsten and/or tantalum and/or chromium and/or cobalt and/or copper and/or alkaline earth metals and/or rare earth metals.

As the organic solvent, the organogel contains carbonic acid and/or any organic solvent of carbonic acid metal salts.

The organogel contains particles sized from 5 nm to 3 μm.

The concentration of stabilizing additions in bismuth and metal salts in the organogel is selected at 0.05 to 1.0 mole/l in a ratio corresponding to the electrolyte stoichiometric composition.

The volume ratio of the nanosized particles in the organogel is from 5 to 45%.

**Brief Description of the Drawings.**

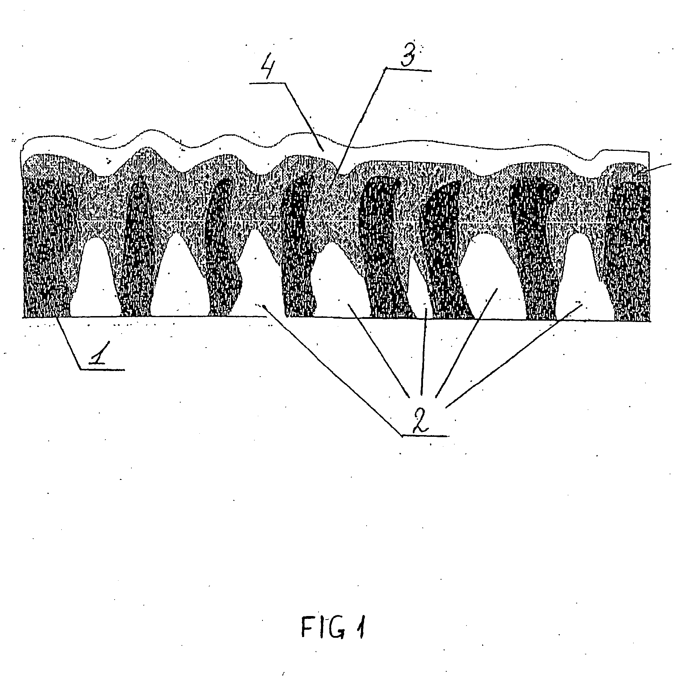

Figure 1 shows schematic of the electrode-electrolyte pair according to the invention.

**Embodiments of the Invention.**

The electrode-electrolyte pair (Fig. 1) comprises a microporous electrode 1 with pores 2, an inner three-dimensional solid electrolyte layer 3 and a dense outer solid electrolyte layer 4.

The efficiency of an electrode-electrolyte pair is determined by the following factors:

- ■ ionic conductivity of the electrolyte based on bismuth oxide (the higher the conductivity, the greater the efficiency);
- ■ electrolyte layer thickness (the greater the thickness, the greater the efficiency);
- ■ electrical resistivity at the electrode-electrolyte boundary (the lower the resistivity, the greater the efficiency);
- ■ contact area between the electrode and the electrolyte (the greater the area, the greater the efficiency);

■ electrochemical contact area of the gaseous phase, the electrode and the electrolyte (the greater the electrochemical contact area, the greater the efficiency).

Thus, the efficiency of a fuel cell, i.e. that of an electrode-electrolyte pair, is determined by the composition of bismuth oxide and the electrode-electrolyte pair design.

The operation efficiency of the electrode-electrolyte pair is mainly determined by the density of the bismuth oxide electrolyte layer (absence of through pores and macrocracks) and its ability to resist thermal stresses both during the fabrication and during the operation of the fuel cell. The latter quality of the electrolyte layer material depends on the strength of the material, electrolyte adhesion to the electrode material and the ability of the electrode-electrolyte pair to relieve mechanical stresses without forming cracks, taking into account the role of the surface stress concentrators on the electrode-electrolyte boundary.

Thus, the efficiency of the electrode-electrolyte pair is determined by the composition of metal-doped bismuth oxide, its mechanical properties under the condition of their maximum matching with the mechanical properties of the electrode and the design of the electrolyte layer on the porous electrode surface.

The possibility of achieving the optimum properties and parameters of an electrode-electrolyte pair is determined by its fabrication method.

As the electrolyte material for fuel cells, metal-doped bismuth oxide is used. As the doping metals, yttrium and/or vanadium and/or molybdenum and/or zirconium and/or lead and/or tungsten and/or tantalum and/or chromium and/or cobalt and/or copper and/or alkaline earth metals and/or rare earth metals are used.

Doping allows producing stabilized bismuth oxide having a cubic fluoride structure or perovskite like structures and oxygen deficiency in the lattice. Preferably, structures having high oxygen ion conductivity are used.

For example, the cubic structure of bismuth oxide can be stabilized at low temperature by doping with rare earth metals such as Y, La, Pr, Nd, Sm, Gd, Dy, Tb, Er. In particular, the high oxygen conductivity of $85Bi_2O_3$-$15Pr_6O_{11}$ electrolyte at 450 °C is $1.2 \ 10^{-2}$ Sm $cm^{-1}$.

Other oxide systems for bismuth oxide base oxygen electrolytes are known, such as $Bi_2O_3$- $Mo_2O_3$ и $Bi_8Pb_5O_{17}$. Electrolyte of the $Bi_2O_3$ - $Mo_2O_3$ и $Bi_8Pb_5O_{17}$ system attracts interest due to its high ionic conductivity at 350 - 400 °C.

Bismuth oxide has a low mechanical strength, low durability and low reduction capacity. The low strength is due to the volume changes and cracking resulting from the cubic to rhombohedral phase transformation. Furthermore, the phase transformation reduces the ionic conductivity of the material. These disadvantages can be eliminated by additional doping or using layered structures. For example, a good stability of the cubic phase (to 4000 h at 600°C) can be obtained by addition of 25 mol% $Y_2O_3$ and 2 - 7.5 mol% $ZrO_2$. This material has a 600°C ionic conductivity of $(4 - 9) \ 10^{-2}$ Sm $cm^{-1}$ and is a good choice of electrolyte material for low-temperature electrochemical devices.

In the invention suggested herein, electrode 1 may have a flat or pipe-like shape and consist of a ceramic or metallic material with pore sizes of above 1 $\mu$m. For example, the electrode can be in stainless steels and allows, perovskite family ceramics like $LaMnO_3$, $LaCoO_3$, $LaNiO_3$, lanthanum gallates and other metal oxides having a good electronic conductivity and catalytic activity to ionize air oxygen. Electrode porosity is typically 30 to 80%.

The inner three-dimensional layer 3 consisting of stabilized bismuth oxide penetrates into the porous electrode 1 to a depth of 3 - 50 $\mu$m. The penetration depth (H) depends on electrode pore diameter (D), typically as H = (2-3) D.

The key problem of thin electrolyte layer efficiency and reliability, however produced, is its defectiveness, i.e. the presence of pores and microcracks, as well as poor adhesion. The main origin of this problem are the high thermal and internal stresses both in the electrolyte itself and on the phase boundary. During electrode deposition onto the porous surface of electrode 1, the surface microroughnesses act as stress concentrators thus leading to crack initiation even at relatively low thermal and internal stresses.

In the invention disclosed herein, of extreme importance is the inner nanoporous three-dimensional electrolyte layer 3. For example, due to the penetration of the layer 3 into the electrode 1, its nanoporosity and the good adhesion to the materials of the electrode 1, the surface stress concentrators are eliminated, the electrode and electrolyte thermal expansion coefficients are matched and the mechanical stresses are relieved. The above effects become even stronger if the inner layer 3 has a porosity gradient, i.e. an increase in porosity from the electrode surface downwards. These factors tangibly increase the reliability and operation efficiency of the electrode-electrolyte pair, primarily expressed in the prevention of cracking and defect formation in the dense layer 4. Moreover, this advantage provides for the minimization of the thickness of the dense layer 4, thus reducing the working temperature of the electrochemical device and an increase in its electrochemical efficiency.

The high strength and cracking resistance of the inner layer 3 that are of primary importance for the fabrication of the electrode-electrolyte pair are achieved due to the three dimensions and the specific combined structure consisting of 3 - 1000 nm grains and an amorphous phase.

In the invention disclosed herein, the role of the inner nanoporous three-dimensional layer 3 consisting of doped bismuth oxide is important also from the viewpoint of increasing the electrochemical efficiency of the electrode-electrolyte pair. This is due to the multiple increase in the area of the electrical contact between the material of layer 3 and the material of electrode 1, as compared with counterparts.

The dense layer 4 of solid electrolyte is a thin two-dimensional layer consisting of doped bismuth oxide. Due to the layer 4 localization on the surface of the inner nanoporous layer 3 that eliminates the surface stress concentrators and relieves all the technological and thermal stresses, it may be up to 0.5 - 15 $\mu$m in thickness. Due to this fact, the ohmic losses in the electrolyte are minor, providing for a high electrochemical efficiency of the electrolyte as is. The amorphous structure of the layers 3 and 4 provides for the strength and elasticity of the electrode that are important at the electrode-electrolyte pair fabrication stage where the reject percentage is known to be the highest. This advantage indirectly reduces the cost of the electrode-electrolyte pair and the electrochemical device as a whole. After the deposition of the electrolyte layer 4 the amorphous structure of doped bismuth oxide can be crystallized without the risk of cracking in the layer.

The compositions of the layers 3 and 4 can be similar or different. The composition and properties may exhibit a gradient behavior across the layers 3 and 4. This can be achieved by sequential deposition of the layers 3 and 4 with an appropriate change in the technological conditions and the materials used. This feature broadens the potential capabilities of the pair and its technology. Moreover, where one of the electrolyte layers should have special properties, bismuth oxide can be doped with multiple different metals.

The suggested electrode-electrolyte pair is fabricated used the suggested method and the suggested organogel.

The organogel is a metalorganic liquid consisting of an organic solution of bismuth and alloying metal organic salts with an addition of stabilized bismuth oxide particles. The organic basis of the metal salts is a mixture of $\alpha$-branching carbonic acids with the general formula $H(CH_2\text{-}CH_2)_n CR'R''\text{-}COOH$, where R' is $CH_3$, R'' is $C_m H_{(m+1)}$ and m is from 2 to 6, with an average molecular weight of 140-250. The organic salt solvent is carbonic acid and/or any other organic solvent of carbonic acids, e.g. toluene, octanol etc. The main function of the solvent is to adjust the viscosity of the organogel.

The salts of bismuth and alloying metals, such as yttrium, vanadium, molybdenum, zirconium, lead, tungsten, niobium, tantalum, chromium, cobalt, copper, alkaline earth metals and rare earth metals are obtained by extraction from water solutions of appropriate metal salts to a mixture of carbonic acid, following which the metal carboxylates are mixed in the proportion as is required for the production of the final electrolyte stoichiometric composition. The concentration of each metallic element in the carboxylates may vary from 0.05 to 1.0 mole/1.

The material of the nanosized particles is stabilized and/or doped bismuth oxide. The size of the nanoparticles corresponding to the electrolyte composition or part of the electrolyte composition is 5 nm to 100 $\mu$m. The volume ratio of the particles in the organogel is 5 to 45% of the total organic liquid volume. The volume ratio of the particles in the organogel controls the organogel viscosity and the density of the electrolyte layer deposited. The higher the particles content, the higher the organogel viscosity and the nanoporosity of the electrolyte layer deposited. The rule for determining the optimum volume ratio of the particles in the organogel is as follows: the greater the electrode pore size, the greater the volume ratio of the particles. Organogel is produced by mechanically mixing the particles and the organic liquid.

The electrolyte layer production method is based on destruction (decomposition) of the organogel organic component deposited on the electrode surface. An oxide layer forms on the surface, composed of the particles and oxides of the metals chemically deposited from appropriate metal carboxylates in the organogel composition. Oxides of metals deposited from carboxylates cement the particles between themselves to form a monolithic structure. Unlike other solution deposition methods that produce metal oxide powders on the surface that need high-temperature sintering, the method disclosed herein allows direct production of a compact electrolyte layer at low temperatures, this being a fundamental distinctive feature of the method.

The difference is attributed to the property of metal oxides deposited from carboxylates to have an amorphous structure during destruction. An amorphous structure is a solid counterpart of liquids, and, by analogy with liquid electrolytes, it has the following advantages:

■ it provides for the greatest possible area of electrochemical contact between the bismuth oxide electrolyte and the electrode materials;
■ it inherits the microroughnesses of the electrode surfaces, including the surface of their open pores;
■ it covers the open pores and microcracks on the surface of electrodes.

Moreover, sequential transition from the liquid state of the organogel to a crystalline bismuth oxide structure through an intermediate amorphous state allows optimizing some useful properties of the electrolyte, such as adhesion, internal stresses and dif fusion interaction at phase boundaries.

Stages of electrolyte formation on a microporous surface are as follows.

The first stage is deposition of the organogel onto the surface of the porous electrode using any known method. During the synthesis of the inner nanoporous three-dimensional electrolyte layer, the deposition includes impregnation of the surface pores of the electrodes with the organogel. The impregnation is performed by mechanical pressing of the organogel into the porous surface of the electrode, e.g. with a paint roller, or by vacuum impregnation. Vacuum impregnation is preferably used for small pore electrodes. For the production of the dense outer electrolyte layer 4, the organogel is deposited by spraying or printing.

The second stage is destruction (decomposition) to produce an electrolyte layer on the surface and remove the organic components in a gaseous state.

The two above process stages can be unified by depositing the organogel onto the heated electrode surface by spraying or printing, provided the surface temperature is sufficient for destruction.

The electrolyte layer can be synthesized using any process that causes destruction of the organic part of the organogel, e.g. thermal, induction or infrared heating.

The simplest and cheapest method from the technological and economical viewpoints is thermal destruction (pyrolysis). The destruction onset temperature for the organogel is about 200 °C. The process can be conducted under atmospheric pressure in air or in an inert or weakly reducing gas atmosphere. The temperature and the gas atmosphere determine the destruction rate and hence electrolyte properties. Stabilization of the intermediate amorphous state is preferably performed in an inert or weakly reducing gas atmosphere or using high-rate destruction methods. The minimum electrolyte layer formation time is 30 seconds.

For example, an electrolyte layer can be synthesized by heating the electrode in an inert or weakly reducing gas atmosphere to within 600 °C and depositing the organogel onto the surface by spraying. High-temperature impregnation of the electrode surface pores occurs immediately upon the incidence of the organogel onto the surface. During destruction, the organic part of the organogel decomposes to volatile components, whereas the surface, including the surface pores, becomes covered with oxides that form the electrolyte layer. During the second deposition of the organogel the electrolyte layer forms on the surface of the first deposited layer. The density and properties of the outer electrolyte layer are determined by the organogel composition and properties.

Organogel can be deposited onto the cold electrode surface for further destruction. For thermal destruction, the temperature should also be within 600 °C.

The final synthesis of crystalline electrolyte from the already formed amorphous material layer implies final air heat treatment. Preferably, the heat treatment temperature should not exceed the working temperature of the electrochemical device by more than 10-15%.

Organogel properties, such as particle composition, metal composition and concentrations in the organic salt mixture, and the volume ratios of the particles and the carboxylate solution are chosen depending on the final electrolyte composition, thickness, substrate surface properties etc.. These organogel properties allow controlling all the electrolyte parameters with due regard to the substrate surface properties.

The method allows producing electrolyte films on substrates of any materials, shapes and sizes.

The method is very efficient and cost-effective.

The method is easily adaptable to complete automation and conveyor fabrication setup.

The low electrolyte layer synthesis temperatures provide for yet another fundamental advantage in comparison with the other known methods. This advantage is the absence of chemical interaction between the electrolyte and the electrode materials. This results in the absence of highly electrically resistant oxides on the phase boundary and hence provides for a significant increase in the efficiency of the pair and the electrochemical device as a whole.

Below, the possibilities of the first electrode-electrolyte pair embodiment fabrication method and the organogel for this method will be illustrated with specific examples that do not limit the scope of this invention.

**Example 1.** Organogel for the production of electrolyte of the $Bi_2O_3$ - $Ln_2O_3$ system, where Ln = La, Pr, Nd, Sm, Gd, Dy, Tb, Er, e.g., $Bi_{1.85}Pr_{0.15}O_3$.

As is well known, bismuth oxide doping with lanthanides favors the stabilization of the highly conducting cubic phase at low temperatures. $Bi_{1.85}Pr_{0.15}O_3$ has the highest oxygen conductivity at temperatures below 600°C.

Bi and Pr carboxylates with concentrations of 0.05 - 1.0 mole/l are produced by extraction of water salts of bismuth and proactinium to a mixture of carbonic acids with the general formula $H(CH_2\text{-}CH_2)_nCR'R''\text{-}COOH$, where R' is $CH_3$, R'' is $C_mH_{(m+1)}$ and m is from 2 to 6, with an average molecular weight of 140-250. The excess quantity of carbonic acids act as solvent. Bi and Pr carboxylates are mixed in proportions corresponding to the stoichiometric composition of $Bi_{1.85}Pr_{0.15}O_3$ electrolyte.

The carboxylate solution is mixed with 5 - 3000 nm sized nanometric particles of the $Bi_{1.85}Pr_{0.15}O_3$ composition. The volume ratio of the nanometric particles is 5 to 45% of the organic liquid volume.

Organogel according to Example 1 is used for the production of the inner nanoporous three-dimensional $Bi_{1.85}Pr_{0.15}O_3$ composition electrolyte layer on metallic or ceramic electrodes with pore sizes from 1 to 20 $\mu$m and penetration depth into the electrode of 5 to 50 $\mu$m, respectively.

The inner electrolyte layer on coarse porous surfaces is produced with a high metal concentration in the carboxylates, preferably, 0.1 - 1 mole/l, a high powder to solution ratio, preferably, 15 - 45% powder and particles sized to 3 $\mu$m.

The inner electrolyte layer on microporous and smooth surfaces, as well as the outer layer, are produced with a low metal concentration in the carboxylates, preferably, 0.05 - 0.1 mole/1, a low powder to solution ratio, preferably, 5 - 55% powder and particles sized 5 to 500 nm.

Organogel for the deposition of bismuth oxide stabilized with other lanthanides is produced using a similar method.

**Example 2**. Organogel for the production of electrolyte of the $Bi_2O_3 - Mo(W)_2O_3$ system.

It is well-known [T.Suzuki, K.Kaku, S.Ukawa and Y.Dansui, Solid State Ionics 13 (1984) 237] that electrolyte of the $Bi_2O_3 - Mo(W)_2O_3$ system exhibits a high ionic conductivity at a very low temperature (350 - 400°C). However, high-temperature production of this electrolyte is quite complex due to the high volatility of molybdenum oxide. This serious technical problem is easily solved by the method suggested herein.

Bi and Mo carboxylates with concentrations of 0.05 - 1.0 mole/l are produced by extraction of water salts of molybdenum and bismuth to a mixture of carbonic acids with the general formula $H(CH_2-CH_2)_nCR'R''-COOH$, where R' is $CH_3$, R" is $C_mH_{(m+1)}$ and m is from 2 to 6, with an average molecular weight of 140-250. Bi and Mo carboxylates are mixed in proportions corresponding to the stoichiometric composition of $Bi_{1.85}Pr_{0.15}O_3$ electrolyte.

The carboxylate solution is mixed with 5 - 3000 nm sized particles of the $Bi_2O_3 - Mo_2O_3$ composition. The volume ratio of the nanometric particles is 5 to 45% of the organic liquid volume.

The parameters of this organogel used in different embodiments of the invention are similar to those in Example 1.

**Example 3**. Organogel for the production of electrolyte of the Bi-Pb-O system, e.g. $Bi_{0.62}Pb_{0.38}O_{1.5}$ or $(Bi_{0.90}\,Pb_{0.10})_{0.80}\,Y_{0.20}\,O_{1.5}$.

Bi, Pb and Y carboxylates with concentrations of 0.05 - 1.0 mole/l are produced by extraction of water salts of bismuth, lead and yttrium to a mixture of carbonic acids with the general formula $H(CH_2-CH_2)_nCR'R''-COOH$, where R' is $CH_3$, R" is $C_mH_{(m+1)}$ and m is from 2 to 6, with an average molecular weight of 140-250. Bi and Pb carboxylates are mixed in proportions corresponding to the stoichiometric composition of $Bi_{0.62}Pb_{0.38}O_{1.5}$ electrolyte, and Bi, Pb and Y carboxylates are mixed in proportions corresponding to the stoichiometric composition of $(Bi_{0.90}\,Pb_{0.10})_{0.80}\,Y_{0.20}\,O_{1.5}$ electrolyte.

The carboxylate solutions are mixed with 5 - 3000 nm sized particles of the Bi-Pb-O system. The volume ratio of the particles is 5 to 45% of the organic liquid volume.

The parameters of this organogel used in different embodiments of the invention are similar to those in Example 1.

**Example 4.** Organogel for the production of electrolyte of the $(Bi_{1-x}\,Y_xO_{1.5})1-y\,(ZrO_2)_y$ or $(Bi_{1-x}\,Y_xO_{1.5})_{1-y}(PrO_{1.833})_y$ systems.

Electrolytes of the $(Bi_{1-x}\,Y_xO_{1.5})_{1-y}\,(ZrO_2)_y$ or $(Bi_{1-x}\,Y_xO_{1.5})_{1-y}\,(PrO_{1.833})_y$ systems have a good ionic conductivity, good mechanical properties and structural stability at medium and low temperatures.

Bi, Y and Zr(Pr) carboxylates with concentrations of 0.05 - 1.0 mole/l are produced by extraction of water salts of bismuth, yttrium and zirconium (protactinium) to a mixture of carbonic acids with the general formula $H(CH_2-CH_2)_nCR'R''-COOH$, where R' is $CH_3$, R" is $C_mH_{(m+1)}$ and m is from 2 to 6, with an average molecular weight of 140-250. Bi, Y and Zr(Pr) carboxylates are mixed in proportions corresponding to the stoichiometric composition of $(Bi_{1-x}Y_xO_{1.5})_{1-y}(ZrO_2)_y$ or $(Bi_{1-x}\,Y_xO_{1.5})_{1-y}(PrO_{1.833})y$ electrolyte.

The carboxylate solutions are mixed with 5 - 3000 nm sized particles corresponding to the composition of an electrolyte material of the $(Bi_{1-x}\,Y_xO_{1.5})_{1-y}(ZrO_2)_y$ or $(Bi_{1-x}\,Y_xO_{1.5})_{1-y}\,(PrO_{1.833})_y$ systems, respectively.

The volume ratio of the particles is 5 to 45% of the organic liquid volume.

The parameters of this organogel used in different embodiments of the invention are similar to those in Example 1.

**Example 5**. Organogels for the production of other bismuth oxide base electrolytes, e.g. $Bi_2O_3 - MeO$ (Me = Cr, Co, Ca, Ba, Sr, Cu, Ni); $\gamma$-$Bi_4\,V_2O_{11}$ doped with Cu or Ni.

The use of bismuth and other metal carboxylates and particles of respective compositions according to examples 1 through 4 allows producing organogels suitable for the deposition of any bismuth oxide base electrolytes and performing additional doping, for example, aiming at providing specific additional properties of the resultant electrolyte.

**Example 6**. Method of fabrication of an electrode-electrolyte pair consisting of a porous electrode based on doped bismuth oxide.

The electrode material can be porous ceramic or metallic materials of flat or pipe-like shape with porosity of 30 to 75% and pore sizes of 1 to 20 $\mu$m.

Example 6.1. Method of fabricating a pair of an electrode and a two-layered electrolyte based on doped bismuth oxide of constant or variable composition and properties.

The electrode has a pore size of 1 - 5 $\mu$m.

The electrolyte is produced by thermal destruction. The deposition is performed in at least two stages.

At the first stage, the inner three-dimensional electrolyte layer is produced, pref erably, inside the electrode surface pores. The function of the inner electrolyte layer is as follows:

1. coverage of the electrode surface pores with the electrolyte material;
2. relieving of the internal and thermal stresses at the phase boundary of the two contacting materials and in the electrode material layer towards the electrolyte;
3. elimination of the negative effect of surface stress concentrators in the electrode material;
4. maximizing the electrochemical contact area with the electrolyte at the electrode side;

5. matching the thermal expansion coefficients of the electrode and electrolyte materals.

The inner bismuth oxide base electrolyte layer is produced using one of the organogels according to Examples 1 - 5 with metal concentration of 0.05 - 1 mole/l, powder volume fraction of 5 - 15% and a particle size of 5 to 500 nm.

The organogel is deposited onto the cold surface with a paint roller by pressing it into the electrode surface pores or one-side vacuum impregnation of the porous electrode. Destruction is performed by heating the electrode to 200 - 600 °C in an argon atmosphere or in an argon and hydrogen mixture at reference pressure. Destruction produces, on the heated electrode surface, a partially amorphous three-dimensional layer of nanoporous SDC electrolyte penetrating into the electrode pores to 2 - 10 $\mu$m. Electrolyte properties are stabilized by crystallization annealing at 600 - 1000 °C exceeding the working temperature of the electrochemical device by at least 15%, the electrolyte grain size being 100 - 5000 nm.

At the second stage, a dense two-dimensional electrolyte layer of the same composition is produced. This is performed using the same organogel composition with metal concentration of 1 mole/1, powder volume fraction of 5 and a particle size of 5 to 500 nm. The organogel is deposited onto the cold electrolyte sublayer surface with subsequent heating to 500 - 600 °C in an argon atmosphere or in an argon and hydrogen mixture or onto the sublayer surface heated to 400 - 500 °C in a similar atmosphere. The final treatment is in air at 600 - 1000 °C exceeding the working temperature of the electrochemical device by at least 15%. As a result, a dense, defect- and crack-free two-dimensional electrolyte layer with a grain size of 100 - 5000 nm forms on the sublayer surface. The thickness of this latter layer is 3 - 10 $\mu$m.

Organogel can be deposited onto the sublayer surface heated to 300 - 400 °C in air. Destruction produces dense, defect- and crack-free two-dimensional electrolyte layer on the sublayer surface. The final treatment is in air at 600 - 1000 °C exceeding the working temperature of the electrochemical device by at least 15%. As a result, a dense, defect- and crack-free two-dimensional electrolyte layer forms on the sublayer surface.

The electrolyte produced as above was a continuous layer part of which, i.e. the three-dimensional nanoporous electrolyte, penetrated into the porous electrode structure to 2 - 10 $\mu$m, and the dense two-dimensional outer layer was uniformly distributed over the surface and inherited its roughness pattern.

Multilayered electrolytes of variable composition and properties can be produced by repeating the above procedures and using different organogel compositions.

<u>Example 6.2.</u> Method of fabricating a pair of an electrode and a two-layered electrolyte based on doped bismuth oxide of constant or variable composition and properties.

The electrode has a pore size of 5 - 20 $\mu$m.

The electrolyte is produced by thermal destruction. The deposition is performed in at least two stages.

At the first stage, the inner three-dimensional electrolyte layer is produced, pref erably, inside the electrode surface pores. The function of the inner electrolyte layer is as in Example 6.1.

The inner bismuth oxide base electrolyte layer is produced using one of the organogels according to Examples 1 - 5 with metal concentration of 0.1 - 1.0 mole/l, powder volume fraction of 45% and a particle size of 5 to 3000 nm.

The organogel is deposited onto the cold surface with a paint roller by pressing it into the electrode surface pores or one-side vacuum impregnation of the porous electrode. Destruction is performed by heating the electrode to 200 - 400 °C in air. Destruction produces, on the heated electrode surface, a partially amorphous three-dimensional layer of nanoporous SDC electrolyte penetrating into the electrode pores to 10-50 $\mu$m. Electrolyte properties are stabilized by crystallization annealing at 600 - 1000 °C exceeding the working temperature of the electrochemical device by at least 15%. If necessary, the procedure is repeated aiming at covering the electrode pores.

At the second stage, a dense two-dimensional electrolyte layer of the same composition is produced. This is performed using the same organogel composition with metal concentration of 1 mole/1, powder volume fraction of 5 and a particle size of 5 to 500 nm. The organogel is deposited onto the cold electrolyte sublayer surface with subsequent heating to 200 - 400 °C in air. The final treatment is in air at 600 - 1000 °C exceeding the working temperature of the electrochemical device by at least 15%. As a result, a dense, defect- and crack-free two-dimensional electrolyte layer with a grain size of 100 - 5000 nm forms on the sublayer surface. The thickness of this latter layer is 1 - 3 $\mu$m. If necessary, the procedure is repeated aiming at covering the electrode pores.

Organogel can be deposited onto the sublayer surface heated to 200 - 300 °C in air. Destruction produces dense, defect- and crack-free two-dimensional electrolyte layer on the sublayer surface. The final treatment is in air at 600 - 1000 °C exceeding the working temperature of the electrochemical device by at least 15%. As a result, a dense, defect- and crack-free two-dimensional electrolyte layer forms on the sublayer surface.

The electrolyte produced as above was a continuous layer part of which, i.e. the three-dimensional nanoporous electrolyte, penetrated into the porous electrode structure to 10-50 $\mu$m, and the dense two-dimensional outer layer was uniformly distributed over the surface and inherited its roughness pattern.

Multilayered electrolytes of variable composition and properties can be produced by repeating the above procedures and using different organogel compositions.

## Claims

1. Electrode-electrolyte pair comprising a porous electrode to the surface of which is deposited a multilayered solid electrolyte based on bismuth oxide with stabilizing additions, the solid electrolyte consisting of the inner nanoporous three-dimensional solid electrolyte layer of combined amorphous and crystalline structure which fills, at least partially, the surface pores of the microporous electrode to a depth of 2 - 50 $\mu$m, and a dense outer electrode layer of combined amorphous and crystalline structure located on the surface of said inner layer.

2. Electrode-electrolyte pair according to Claim 1, wherein said inner and outer electrolyte layers have similar or different compositions.

3. Electrode-electrolyte pair according to Claim 1, wherein said stabilizing additions of the solid electrolyte are yttrium and/or vanadium and/or molybdenum and/or zirconium and/or lead and/or tungsten and/or niobium and/or tantalum and/or chromium and/or cobalt and/or copper and/or alkaline earth metals and/or rare earth metals.

4. Electrode-electrolyte pair according to Claim 1, wherein said electrode has a flat or pipe-like shape.

5. Electrode-electrolyte pair according to Claim 1, wherein said electrode is made of a microporous ceramic or metallic or metalloceramic material with pore sizes of above 1 $\mu$m.

6. Electrode-electrolyte pair fabrication method comprising the formation, on the porous electrode surface, of a partially electrode-penetrating multilayered solid electrolyte based on bismuth oxide with stabilizing additions, to which end the porous electrode surface is initially impregnated with organogel consisting of particles of bismuth oxide with stabilizing additions and an organic solution containing organic salts of cerium and the stabilizing additions, and destruction of the organogel organic part that leads to the chemical deposition of the inner three-dimensional multilayered solid electrolyte layer on the electrode surface, following which the inner organogel layer is deposited onto the surface, said layer consisting of nanosized particles of bismuth oxide with stabilizing additions and an organic solution containing organic salts of bismuth and the stabilizing additions, and destruction of the organogel organic part that leads to the chemical deposition of the dense outer layer of the multilayered electrolyte onto the inner layer surface.

7. Method according to Claim 6, wherein said inner and outer electrolyte layers are produced using organogel of similar or different compositions.

8. Method according to Claim 6, wherein said stabilizing additions of the solid electrolyte are yttrium and/or vanadium and/or molybdenum and/or zirconium and/or lead and/or tungsten and/or niobium and/or tantalum and/or chromium and/or cobalt and/or copper and/or alkaline earth metals and/or rare earth metals.

9. Method according to Claim 6, wherein the impregnation of said porous electrode surface with organogel is performed in vacuum of by mechanical pressing the organogel into the porous electrode surface.

10. Method according to Claim 6, wherein said organogel destruction is performed with high-rate pyrolysis at temperatures within 600°C in an oxidizing, inert or weakly reducing gas atmosphere.

11. Method according to Claim 10, wherein organogel organic part destruction is performed simultaneously or sequentially with the impregnation or organogel deposition onto the inner layer surface.

12. Method according to Claim 10, wherein during organogel impregnation of the electrode or organogel deposition to the inner layer surface with simultaneous destruction, the organogel is deposited to the surface to be coated by spraying or printing.

13. Method according to Claim 10, wherein during organogel impregnation of the electrode or organogel deposition to the inner layer surface with subsequent destruction, the organogel is deposited to the cold surface of the electrode or the inner layer with subsequent high-rate heating of the electrode.

14. Method according to Claim 6, wherein organogel impregnation of the electrode or organogel deposition to the inner layer surface and organogel destruction are performed in one or multiple stages.

15. Organogel used for the fabrication of the electrode-electrolyte pair contains nanosized particles of bismuth oxide with stabilizing additions and an organic solution containing organic salts of bismuth and the stabilizing metals, a mixture of $\alpha$-branching carbonic acids with the general formula $H(CH_2-CH_2)_nCR'R''-COOH$, where R' is $CH_3$, R'' is $C_mH_{(m+1)}$ and m is from 2 to 6, with an average molecular weight of 140-250.

**16.** Organogel according to Claim 14, wherein said stabilizing additions are yttrium and/or vanadium and/or molybdenum and/or zirconium and/or lead and/or tungsten and/or niobium and/or tantalum and/or chromium and/or cobalt and/or copper and/or alkaline earth metals and/or rare earth metals.

**17.** Organogel according to Claim 15, wherein said organic solvent is a mixture of $\alpha$-branching carbonic acids with the general formula $H(CH_2\text{-}CH_2)_nCR'R''\text{-}COOH$, where R' is $CH_3$, R'' is $C_mH_{(m+1)}$ and m is from 2 to 6, with an average molecular weight of 140-250, or carbonic acid and/or any organic solvent of carbonic acid metal salts.

**18.** Organogel according to Claim 15, wherein said organogel contains nanosized particles 5 nm to 3 $\mu$m in size.

**19.** Organogel according to Claim 15, wherein the concentration of stabilizing additions in bismuth and metal salts in the organogel is selected at 0.05 to 1 mole/l in a ratio corresponding to the electrolyte stoichiometric composition.

**20.** Organogel according to Claim 15, wherein the volume ratio of the nanosized particles in the organogel is within 5 to 45%.

FIG 1

## INTERNATIONAL SEARCH REPORT

| International application No. |
| --- |
| PCT/RU 2003/000576 |

A.   CLASSIFICATION OF SUBJECT MATTER

   H01M 8/10, 8/12

According to International Patent Classification (IPC) or to both national classification and IPC

B.   FIELDS SEARCHED

Minimum documentation searched (classification system followed by classification symbols)

   H01M 8/10, 8/12, C04B 35/38, 35/50, B32B 9/00

Documentation searched other than minimum documentation to the extent that such documents are included in the fields searched

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | RU 2001101170 A  (KERAMFIZIKS, INK.), 27.03.2003 | 1-20 |
| A | US 6372375 B1 (CERAMPHYSICS, INC.) Apr. 16, 2002 | 1-20 |
| A | WO 1992/012106 A1 (GAS RESEARCH INSTITUTE) 23. 07. 1992 | 1-20 |
| A | JP 62230621 (NATL INST FOR RES IN INORG MATER) 09. 10. 1987 | 1-20 |
| A | US 5968673 A (TOTO LTD.) Oct. 19, 1999 | 1-20 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 March 2004 (25.03.2004) | 15 April 2004 (15.04.2004) |

| Name and mailing address of the ISA/ | Authorized officer |
| --- | --- |
| RU | |
| Facsimile No. | Telephone No. |

Form PCT/ISA/210 (second sheet) (July 1992)